# FASCICULE DE BREVET EUROPEEN

(11) **EP 4 047 813 B1**
(45) Date de publication et mention de la délivrance du brevet: **09.04.2025**
(21) Numéro de dépôt: 22154492.7
(22) Date de dépôt: 01.02.2022
(51) Int. Cl.: H02P 9/02, H02P 9/10, H02P 11/06, H02P 21/00, H02P 21/12, H02P 25/022

(54) **MODULE DE RÉGULATION POUR UNE MACHINE ÉLECTRIQUE TOURNANTE**
REGULIERUNGSMODUL FÜR ELEKTRISCH UMLAUFENDE MASCHINE
CONTROL MODULE FOR A ROTATING ELECTRICAL MACHINE

(30) Priorité: 18.02.2021 FR 2101567
(43) Date de publication de la demande: 24.08.2022
(73) Titulaire: Valeo Electrification, 95800 Cergy (FR)
(72) Inventeur: BERNARD, Francois Xavier, 94046 CRETEIL CEDEX (FR); KOBYLANSKI, Luc, 94046 CRETEIL CEDEX (FR); ACHACHE, Alice, 94046 CRETEIL CEDEX (FR)
(74) Mandataire: Valeo Powertrain Systems

(56) Documents cités:
- FR-A1- 3 083 025

## Description

L'invention concerne notamment un module de régulation pour une machine électrique tournante d'un véhicule, notamment lors d'un mode de fonctionnement où une batterie du véhicule est déconnectée de la machine.

L'invention trouve une application particulièrement avantageuse dans le domaine des machines électriques tournantes telles que les alternateurs, les alterno-démarreurs ou encore les machines réversibles ou les moteurs électriques. On rappelle qu'une machine réversible est une machine électrique tournante apte à travailler de manière réversible, d'une part, comme générateur électrique en fonction alternateur et, d'autre part, comme moteur électrique par exemple pour démarrer le moteur thermique du véhicule tel qu'un véhicule automobile.

Une machine électrique tournante comprend un rotor mobile en rotation autour d'un axe et un stator fixe. En mode alternateur, lorsque le rotor est en rotation, il induit un champ magnétique au stator qui le transforme en courant électrique afin d'alimenter les consommateurs électriques du véhicule et de recharger la batterie. En mode moteur, le stator est alimenté électriquement et induit un champ magnétique entraînant le rotor en rotation par exemple pour démarrer le moteur thermique.

Le brevet FR3083025 décrit un système de régulation classique pour une machine électrique tournante.

Classiquement, la machine comprend un module de régulation permettant de générer des grandeurs de commande du rotor et du stator pour contrôler la puissance et/ou le couple fournis par la machine. Chacune de ces commandes est déterminée d'une part en fonction de paramètres de référence, notamment donnée par le calculateur global du véhicule indiquant le niveau de fonctionnement souhaité pour la machine, et d'autre part en fonction de paramètres instantanés de fonctionnement de la machine. Les paramètres instantanés sont généralement la vitesse de rotation du rotor et la tension et/ou le courant de sortie généré par la machine.

Ainsi, le module de régulation comprend un module de transformation permettant de déterminer des consignes intermédiaires de commande du stator et du rotor à partir de ces paramètres de référence et de ces paramètres instantanés. Les consignes intermédiaires sont ensuite transmises à des modules de régulation du rotor et du stator générant les grandeurs de commandes finales du rotor et du stator. Les modules de transformation et de régulation fonctionnent chacun à une fréquence propre. Il se crée ainsi des temps de retard entre les modules ce qui peut engendrer un décalage entre le moment où le paramètre instantanés est mesuré pour le calcul de la consigne intermédiaire et le moment où la grandeur de commande finale est injectée dans le rotor et/ou le stator. La valeur du paramètre instantané peut ne plus correspondre à l'état de fonctionnement de rotor et/ou du stator.

Dans certaines conditions et pour ne pas user ou endommager la batterie du véhicule, il est possible de déconnecter la machine électrique tournante et la batterie. Par exemple, lorsque les consommateurs du véhicule doivent être alimentés, que les températures extérieures sont extrêmement froides et que les conditions de sécurité du véhicule sont réunies, il est possible que le calculateur du véhicule commande une déconnexion entre la machine électrique tournante et la batterie pour une période donnée afin de préserver la batterie. La machine électrique tournante fonctionne alors dans un mode de fonctionnement dit sans batterie.

Classiquement, la régulation de la machine électrique tournante fonctionne de la même manière que la machine soit dans un état de fonctionnement normal ou dans un état de fonctionnement sans batterie. Ainsi, le module de régulation de la machine n'est pas impacté par le changement de mode, si ce n'est par l'adaptation de certains coefficients permettant d'optimiser les grandeurs de commande des courants et des tensions.

Cependant, lors du mode de fonctionnement sans batterie, les temps de retard dus aux différences des fréquences de fonctionnement entre les modules peuvent déclencher des défauts de sous-tension ou de surtension sur le réseau de bord du véhicule, notamment en cas d'appel ou de délestage de charge peu important et lorsqu'il y a un nombre faible de charge à alimenter. Le fonctionnement décrit ci-dessus de la machine électrique tournante lors du mode de fonctionnement sans batterie n'est pas assez robuste.

La présente invention vise à permettre d'éviter les inconvénients de l'art antérieur.

A cet effet, la présente invention a donc pour objet un module de régulation pour une machine électrique tournante d'un véhicule, la machine électrique tournante comportant un rotor et un stator. Selon l'invention, le module de régulation présente un mode de fonctionnement dans lequel ladite machine est destinée à être déconnectée d'une batterie du véhicule. Toujours selon l'invention, le module de régulation présente un module rotor agencé pour émettre une première grandeur de sortie de commande du rotor et un module stator agencé pour émettre au moins une deuxième grandeur de sortie de commande du stator. Selon l'invention, notamment lorsque la machine est déconnectée d'une batterie du véhicule, le module rotor est agencé pour générer une première consigne intermédiaire à partir de laquelle est générée la première grandeur de sortie, ladite première consigne intermédiaire étant déterminée à partir d'un signal de référence de potentiel de puissance et d'une vitesse de rotation du rotor et étant indépendante d'une puissance de commande ou d'un couple de commande de la machine. Selon l'invention, notamment lorsque la machine est déconnectée d'une batterie du véhicule, le module stator est agencé pour générer une deuxième consigne intermédiaire à partir de laquelle est générée la deuxième grandeur de sortie, ladite deuxième consigne intermédiaire étant déterminée à partir de la tension de sortie de la machine.

On entend par « ladite première consigne intermédiaire étant indépendante d'une puissance de commande ou d'un couple de commande de la machine » le fait que la puissance ou le couple de commande de la machine n'entre pas en compte dans la détermination de la première consigne intermédiaire du rotor. La consigne de commande du rotor dépend alors uniquement de paramètres de référence et non plus de paramètres instantanés ou de la charge du réseau de bord. Cela permet de choisir le courant d'excitation du rotor de sorte à ce que le flux émis par le rotor soit suffisant pour que la machine puisse débiter le courant requis pour alimenter le réseau de bord sans tenir compte d'une optimisation du rendement du rotor. Le courant d'excitation est ainsi globalement constant pour une vitesse donnée.

Le potentiel de puissance de la machine est notamment la puissance maximale que peut générer la machine pour une vitesse donnée tout en respectant les contraintes en régime permanent, en particulier thermiques, de la machine. Cette puissance maximale lorsque la machine est déconnectée de la batterie peut être la puissance maximale qui peut être transmise au réseau de bord du véhicule, le cas échéant via un convertisseur DC/DC. Cette puissance maximale est par exemple de l'ordre de quelques kW, par exemple égale à 2kW.

Le fait que la deuxième consigne intermédiaire du stator dépende directement de la tension de sortie de la machine permet de réguler la machine avec une consigne de courant stator et non plus avec une consigne de couple intermédiaire comme cela est classiquement fait dans un mode de fonctionnement normal avec batterie.

La présente invention permet de mieux réguler les variations de charges et d'éviter les décrochages sur une plage de variations plus importante. La tension de sortie de la machine est ainsi mieux régulée. Cela permet donc de rendre le mode de fonctionnement sans batterie de la machine électrique tournante plus robuste.

Selon une réalisation, la première consigne intermédiaire peut, en outre, être indépendante d'une tension de sortie de la machine et/ou indépendante du couple généré par la machine.

Selon une réalisation, le module stator comprend un sous-module d'optimisation générant la deuxième consigne intermédiaire et un sous-module de régulation générant la deuxième grandeur de sortie, le sous-module d'optimisation et le sous-module de régulation présentent notamment la même fréquence de fonctionnement. Cela permet d'améliorer la réactivité de la machine vis-à-vis des variations de débits qu'elle peut subir.

Selon une réalisation, la deuxième consigne intermédiaire est, en outre, déterminée à partir d'une tension de référence.

Selon une réalisation, le module stator est agencé pour émettre une deuxième grandeur de sortie de commande du stator et une troisième grandeur de sortie de commande du stator. Par exemple, la deuxième grandeur de sortie permet de contrôler une composante de couple au stator et la troisième grandeur de sortie permet de contrôler une composante de flux au stator.

Selon une réalisation, la deuxième grandeur de sortie et la troisième grandeur de sortie sont déterminées à partir de la deuxième consigne intermédiaire.

Selon une réalisation, la deuxième grandeur de sortie est déterminée à partir d'une comparaison entre la deuxième consigne intermédiaire et un courant d'axe de quadrature du stator.

Selon une réalisation, la troisième grandeur de sortie est déterminée à partir d'une comparaison entre une troisième consigne intermédiaire et un courant d'axe direct du stator.

Selon une réalisation, la troisième consigne intermédiaire est déterminée à partir de la première consigne intermédiaire et de la deuxième consigne intermédiaire.

Selon une réalisation, la deuxième grandeur de sortie est déterminée à partir d'une comparaison entre la deuxième consigne intermédiaire et un courant de sortie de la machine.

Selon une réalisation, le module de régulation comporte, en outre, un dispositif de mesure de courant permettant de mesurer le courant de sortie ou un dispositif d'estimation de courant permettant d'estimer le courant de sortie.

Selon une réalisation, la troisième grandeur de sortie est déterminée à partir d'une comparaison entre la troisième consigne intermédiaire et un courant de sortie de la machine.

Selon une réalisation, le module rotor comporte un sous-module d'optimisation agencé pour générer la première consigne intermédiaire et un sous-module de régulation agencé pour générer la première grandeur de sortie, la première grandeur de sortie étant déterminée à partir d'une comparaison entre la première consigne intermédiaire et le courant d'excitation du rotor.

Selon une réalisation, le module rotor présente une fréquence de fonctionnement inférieure à la fréquence de fonctionnement du module stator. Cela permet de ne pas complexifier le fonctionnement du module rotor sans engendrer de temps de retard dans le calcul des consignes de commande de sortie puisque la régulation de la machine est ici basée plus particulièrement sur le module stator.

Selon une réalisation, le module de régulation comporte, en outre, un dispositif de mesure de courant permettant de mesurer le courant d'excitation du rotor ou un dispositif d'estimation de courant permettant d'estimer le courant d'excitation du rotor.

La présente invention a également pour objet une machine électrique tournante. La machine électrique tournante peut, avantageusement, former un alternateur, un alterno-démarreur, une machine réversible ou un moteur électrique.

La présente invention peut également avoir pour objet un procédé de régulation pour une machine électrique tournante d'un véhicule, la machine électrique tournante comportant un rotor et un stator. Selon l'invention, le procédé de régulation présente un mode de fonctionnement dans lequel ladite machine est destinée à être déconnectée d'une batterie du véhicule. Toujours selon l'invention, le procédé de régulation est mis en œuvre par un module de régulation présentant un module rotor agencé pour émettre une première grandeur de sortie de commande du rotor et un module stator agencé pour émettre au moins une deuxième grandeur de sortie de commande du stator. Selon l'invention, le procédé de régulation présente une étape de génération d'une première consigne intermédiaire à partir de laquelle est générée la première grandeur de sortie, ladite première consigne intermédiaire étant déterminée à partir d'un signal de référence de potentiel de puissance et d'une vitesse de rotation du rotor et étant indépendante d'une puissance de commande ou de couple de commande de la machine. Selon l'invention, le procédé de régulation présente une étape de génération d'une deuxième consigne intermédiaire à partir de laquelle est générée la première grandeur de sortie, ladite deuxième grandeur intermédiaire étant déterminée à partir de la tension de sortie de la machine.

La présente invention pourra être mieux comprise à la lecture de la description détaillée qui va suivre, d'exemples de mise en œuvre non limitatifs de l'invention et de l'examen des dessins annexés.

La [Fig. 1] représente, partiellement, un schéma bloc d'un premier exemple de module de régulation selon l'invention.

La [Fig. 2] représente, partiellement, un schéma bloc d'un deuxième exemple de module de régulation selon l'invention.

Les éléments identiques, similaires ou analogues conservent les mêmes références d'une figure à l'autre. De plus, les exemples de réalisation qui sont décrits dans la suite ne sont nullement limitatifs. On pourra notamment imaginer des variantes de l'invention ne comprenant qu'une sélection de caractéristiques décrites par la suite isolées des autres caractéristiques décrites.

Une machine électrique tournante 10, notamment pour véhicule tel qu'un véhicule automobile ou un drone, transforme de l'énergie mécanique en énergie électrique, en mode alternateur, et peut fonctionner en mode moteur pour transformer de l'énergie électrique en énergie mécanique. Cette machine électrique tournante 10 est, par exemple, un alternateur, un alterno-démarreur, une machine réversible ou un moteur électrique. La machine 10 peut comporter un rotor 11, un stator 12 et un ensemble électronique tel qu'un onduleur ou un convertisseur de tension. Le boitier peut loger le rotor 11 et le stator 12. L'ensemble électronique peut être monté sur le boitier ou déporté du boitier.

Le rotor 11 est un rotor à griffe comportant, ici, deux roues polaires et une bobine enroulée autour d'un noyau des roues polaires. Par exemple, la machine comporte un collecteur est monté sur le rotor et comporte des bagues collectrices reliées par des liaisons filaires à la bobine et un porte-balais disposé de façon à ce que des balais frottent sur les bagues collectrices pour alimenter électriquement la bobine du rotor. Les balais du porte-balais est connectées électriquement à un module de contrôle de l'ensemble électronique qui permet de contrôler l'alimentation électrique du rotor.

Le stator 12 comporte un corps, par exemple formé d'un paquet de tôles doté d'encoches, et un bobinage électrique monté dans le corps. Le bobinage électrique est formé d'une ou plusieurs phases comportant au moins un conducteur électrique. Chaque phase comporte une extrémité formant une sortie de phase qui est connectée électriquement à un module de puissance de l'ensemble électronique pour permettre le contrôle du stator et le redressement du courant de sortie de la machine.

L'ensemble électronique comporte un étage de puissance, comportant au moins un module de puissance permettant de recevoir ou de fournir un signal électrique de puissance aux phases électrique du bobinage. Le module de puissance forme un pont redresseur de tension pour transformer la tension alternative générée par les phases du stator en une tension continue et/ou, à l'inverse, pour transformer une tension continue en une tension alternative pour alimenter les phases du stator. L'ensemble électronique comporte également un étage de commande comprenant un module de commande permettant notamment de contrôler la tension du rotor 11 et la tension du stator 12 en faisant l'interface avec un calculateur externe du véhicule pour le contrôle global de la machine.

Le module de contrôle de l'ensemble électronique comporte un module de régulation 13 permettant de contrôler et de réguler les tensions et/ou les courants d'alimentation du rotor et du stator, notamment lors d'un mode de fonctionnement de la machine dit sans batterie. Dans ce mode de fonctionnement sans batterie, la machine 10 n'est pas reliée électriquement à une batterie du véhicule. La batterie est déconnectée de la machine par exemple par un interrupteur. Dans le cas où le véhicule comporte plusieurs batteries, notamment une batterie pour le réseau 12V et une batterie pour le réseau 48V, la machine est déconnectée d'une des batteries du véhicule, notamment la batterie du réseau 48V.

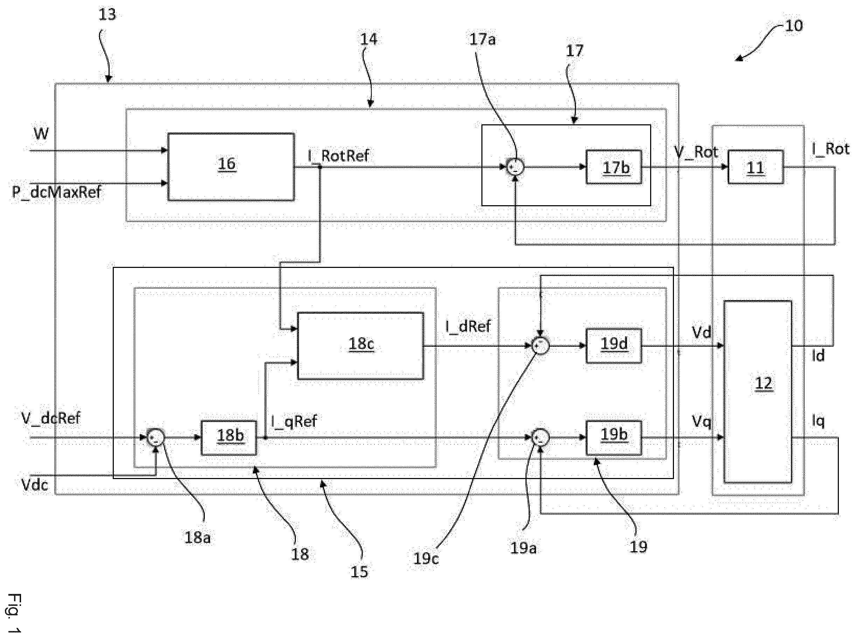

Dans le premier exemple de réalisation illustré sur la figure 1, le module de régulation 13 présente un module rotor 14 et un module stator 15. Le module rotor comporte, ici et de façon non limitative, un sous-module d'optimisation 16 et un sous-module de régulation 17. De manière similaire, le module stator comporte, ici et de façon non limitative, un sous-module d'optimisation 18 et un sous-module de régulation 19.

Le sous-module d'optimisation 16 du module rotor 14 reçoit comme données d'entrée une vitesse W et un signal de référence de potentiel de puissance de la machine P_dcMaxRef. Le potentiel de puissance de la machine P_dcMaxRef est notamment la puissance maximale que peut générer la machine pour une vitesse donnée tout en respectant les contraintes en régime permanent, en particulier thermiques, de la machine. Le sous-module d'optimisation 16 génère une première consigne intermédiaire I_RotRef à partir de la vitesse W et du signal de référence de potentiel de puissance de la machine P_dcMaxRef. Les paramètres de sortie de la machine, tels qu'une tension de sortie Vdc, ne sont pas pris en compte pour le calcul de la première consigne intermédiaire I_RotRef. Le calcul de la première consigne intermédiaire I_RotRef est par exemple fait à partir d'une cartographie donnant un courant d'excitation en fonction de la vitesse W.

La vitesse W correspond à la vitesse réelle de rotation du rotor 11. La vitesse W peut être estimée ou mesurée par exemple à partir d'un capteur de rotation.

Le sous-module de régulation 17 du module rotor 14 reçoit comme données d'entrée la première consigne intermédiaire I_RotRef émise par le sous-module d'optimisation 16 et un courant d'excitation I_Rot du rotor 11. Le sous-module de régulation 17 comprend un comparateur 17a permettant de comparer les deux données d'entrée pour déterminer une première erreur. Le sous-module de régulation 17 comporte également ici un correcteur 17b permettant de convertir la première erreur en une première grandeur de sortie V_Rot pour commander le courant d'excitation de la bobine du rotor 11.

Le courant d'excitation I_Rot correspond au courant d'excitation réel du rotor 11. La courant d'excitation I_Rot peut être estimée ou mesurée par exemple à partir d'un capteur de courant.

Par exemple, le sous-module d'optimisation 16 et le sous-module de régulation 17 du module rotor 14 fonctionnent à la même fréquence qui est par exemple de 1kHZ. Par exemple, le module rotor 14 peut utiliser un signal de régulation de type modulation à largeur d'impulsion (dit PWM).

Le module rotor 14 peut présenter un module de protection thermique (non représenté) permettant d'empêcher un échauffement du rotor 11.

Le sous-module d'optimisation 18 du module stator 15 reçoit comme données d'entrée la tension de sortie Vdc de la machine et une tension de référence V_dcRef. La tension de sortie Vdc de la machine correspond à la tension réelle à la sortie de la machine 10 et notamment à la sortie de l'ensemble électronique après le redressement via les modules de puissance. La tension de sortie Vdc peut être mesurée. La tension de référence V_dcRef correspond à une tension de consigne, par exemple donnée par le calculateur du véhicule, souhaitée en sortie de la machine.

Le sous-module d'optimisation 18 comprend, ici, un comparateur 18a permettant de comparer les deux données d'entrée pour déterminer une erreur intermédiaire. Le sous-module d'optimisation 18 comporte également ici un correcteur 18b permettant de convertir l'erreur intermédiaire en une deuxième consigne intermédiaire I_qRef.

Dans cet exemple, le sous-module d'optimisation comprend un module de détermination 18c recevant en donnée d'entrée la deuxième consigne intermédiaire I_qRef et la première consigne intermédiaire I_RotRef émise par le sous-module d'optimisation 16. Le sous-module de détermination 18c génère une troisième consigne intermédiaire I_dRef.

Le sous-module d'optimisation 18 émet, ici, deux consignes intermédiaire différentes.

Le sous-module de régulation 19 du module stator 15 reçoit comme données d'entrée la deuxième consigne intermédiaire I_qRef, la troisième consigne intermédiaire I_dRef émise par le sous-module d'optimisation 18, un courant d'axe direct Id et un courant d'axe de quadrature Iq du stator 12.

Le sous-module de régulation 19 comprend un premier comparateur 19a permettant de comparer la deuxième consigne intermédiaire I_qRef avec le courant d'axe de quadrature Iq pour déterminer une deuxième erreur. Le sous-module de régulation 19 comporte également ici un premier correcteur 19b permettant de convertir la deuxième erreur en une deuxième grandeur de sortie Vq pour commander la tension injectée dans le bobinage du stator 12.

Le sous-module de régulation 19 peut également comprendre un second comparateur 19c permettant de comparer la troisième consigne intermédiaire I_dRef avec le courant d'axe direct Id pour déterminer une troisième erreur. Le sous-module de régulation 19 peut également comporter un second correcteur 19d permettant de convertir la troisième erreur en une troisième grandeur de sortie Vd pour commander la tension injectée dans le bobinage du stator 12.

Par exemple, la deuxième grandeur de sortie Vq permet de contrôler une composante de couple au stator 12 et la troisième grandeur de sortie Vd permet de contrôler une composante de flux au stator 12.

Le courant d'axe direct Id et le courant d'axe de quadrature Iq correspondent, respectivement, à des composantes, selon un repère vectoriel de Park, du courant de phase réel du stator 12. Lesdits courants Id, Iq peuvent être estimées et/ou mesurées par exemple à partir d'un capteur de courant.

Par exemple, le sous-module d'optimisation 18 et le sous-module de régulation 19 du module stator 15 fonctionnent à la même fréquence qui est par exemple de 10kHZ. La fréquence de fonctionnement du module stator 15 est ici supérieure à la fréquence de fonctionnement du module rotor 14. Par exemple, le module stator 15 peut utiliser un signal de régulation de type modulation à largeur d'impulsion (dit PWM) ou un signal de régulation de type à modulation pleine onde.

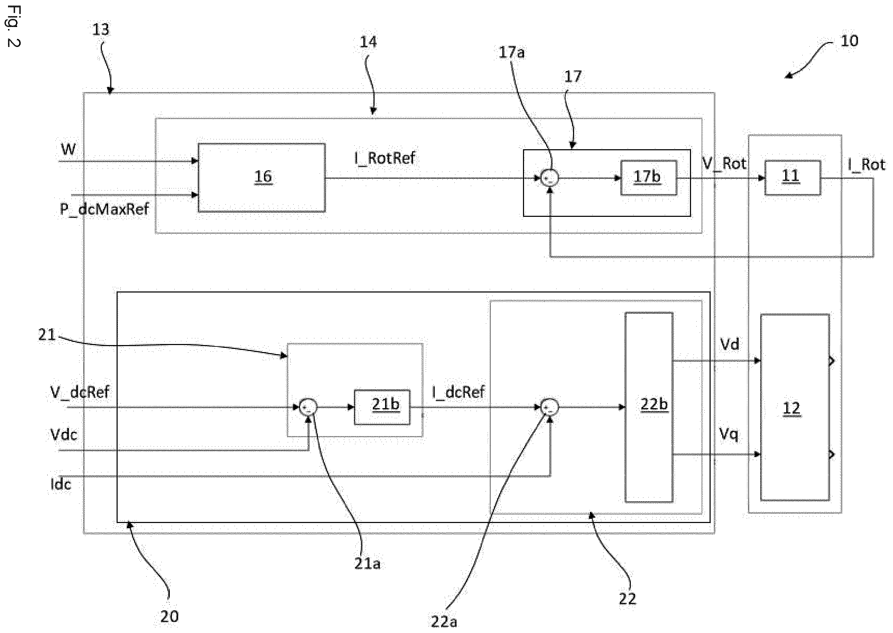

Dans l'exemple de la figure 2 illustrant un deuxième mode de réalisation, le module rotor 14 est identique à celui du premier mode de réalisation décrit en référence à l'exemple de la figure 1. Seul le module stator 15 est aménagé différemment et va être décrit ci-dessous.

Le module stator 20 comporte, ici, un sous-module d'optimisation 21 et un sous-module de régulation 22.

Le sous-module d'optimisation 21 reçoit comme données d'entrée la tension de sortie Vdc de la machine et la tension de référence V_dcRef. La tension de sortie Vdc et la tension de référence V_dcRef sont identiques à celle du premier mode de réalisation. Le sous-module d'optimisation 21 comprend, ici, un comparateur 21a permettant de comparer les deux données d'entrée pour déterminer une première erreur. Le sous-module d'optimisation 21 comporte également ici un correcteur 21b permettant de convertir la première erreur en une deuxième consigne intermédiaire I_dcRef.

Le sous-module de régulation 22 reçoit comme données d'entrée la deuxième consigne intermédiaire I_dcRef émise par le sous-module d'optimisation 21 et un courant de sortie Idc du stator 12. Le sous-module de régulation 22 comprend un comparateur 22a permettant de comparer les deux données d'entrée pour déterminer une deuxième erreur. Le sous-module de régulation 22 comporte également ici un correcteur 22b permettant de convertir la deuxième erreur en la deuxième grandeur de sortie Vq et la troisième grandeur de sortie Vd. La deuxième grandeur de sortie Vq et la troisième grandeur de sortie Vd sont respectivement identiques à celles du premier mode de réalisation.

Le courant de sortie Idc correspond au courant de sortie réel de la machine 10 et notamment à la sortie de l'ensemble électronique après le redressement via les modules de puissance. La courant de sortie Idc peut être estimée ou mesurée par exemple à partir d'un capteur de courant.

Par exemple, le sous-module d'optimisation 21 et le sous-module de régulation 22 du module stator 15 fonctionnent à la même fréquence qui est par exemple de 10kHZ. Par exemple, le module stator 15 peut utiliser un signal de régulation de type modulation à largeur d'impulsion (dit PWM) ou un signal de régulation de type à modulation pleine onde.

La présente invention trouve des applications en particulier dans le domaine des systèmes de régulation pour alternateur ou machine réversible mais elle pourrait également s'appliquer à tout type de machine tournante.

Bien entendu, la description qui précède a été donnée à titre d'exemple uniquement et ne limite pas le domaine de la présente invention dont on ne sortirait pas en remplaçant les différents éléments par tous autres équivalents.

## Revendications

1. Module de régulation pour une machine électrique tournante d'un véhicule, la machine électrique tournante (10) comportant un rotor (11) et un stator (12) et le module de régulation (13) présentant un mode de fonctionnement dans lequel ladite machine est destinée à être déconnectée d'une batterie du véhicule, le module de régulation (13) présentant un module rotor (14) agencé pour émettre une première grandeur de sortie (V_Rot) de commande du rotor (12) et un module stator (15, 20) agencé pour émettre une deuxième grandeur de sortie (Vq) et une troisième grandeur de sortie (Vd) de commande du stator (12), le module de régulation étant **caractérisé en ce que** :
- le module rotor (14) est agencé pour générer une première consigne intermédiaire (I_RotRef) à partir de laquelle est générée la première grandeur de sortie (V_Rot), ladite première consigne intermédiaire (I_RotRef) étant déterminée à partir d'un signal de référence de potentiel de puissance (Pdc_MaxRef) et d'une vitesse de rotation (W) du rotor et étant indépendante d'une puissance de commande ou d'un couple de commande de la machine, le potentiel de puissance de la machine est notamment la puissance maximale que peut générer la machine pour une vitesse donnée tout en respectant les contraintes en régime permanent, en particulier thermiques, de la machine,
- le module stator (15, 20) est agencé pour générer une deuxième consigne intermédiaire (I_qRef, I_dcRef) à partir de laquelle sont générées la deuxième grandeur de sortie (Vq) et la troisième grandeur de sortie (Vd), ladite deuxième consigne intermédiaire (I_qRef, I_dcRef) étant déterminée à partir de la tension de sortie (Vdc) de la machine.

2. Module de régulation selon la revendication précédente, **caractérisé en ce que** le module stator (15, 20) comprend un sous-module d'optimisation (18, 21) générant la deuxième consigne intermédiaire (I_qRef, I_dcRef) et un sous-module de régulation (19, 22) générant la deuxième grandeur de sortie (Vd, Vq), le sous-module d'optimisation et le sous-module de régulation présentant notamment la même fréquence de fonctionnement.

3. Module de régulation selon l'une des revendications précédentes, **caractérisé en ce que** la deuxième consigne intermédiaire (I_qRef, I_dcRef) est, en outre, déterminée à partir d'une tension de sortie de référence (V_dcRef).

4. Module de régulation selon l'une des revendications précédentes, **caractérisé en ce que** la deuxième grandeur de sortie (Vq) est déterminée à partir d'une comparaison entre la deuxième consigne intermédiaire (I_qRef) et un courant d'axe de quadrature (I_q) du stator.

5. Module de régulation selon l'une des revendications précédentes, **caractérisé en ce que** la troisième grandeur de sortie (Vd) est déterminée à partir d'une comparaison entre une troisième consigne intermédiaire (I_dRef) et un courant d'axe direct (I_d) du stator.

6. Module de régulation selon la revendication précédente, **caractérisé en ce que** la troisième consigne intermédiaire (I_dRef) est déterminée à partir de la première consigne intermédiaire (I_RotRef) et de la deuxième consigne intermédiaire (I_qRef).

7. Module de régulation selon l'une des revendications précédentes, **caractérisé en ce que** le module rotor (14) comporte un sous-module d'optimisation (16) agencé pour générer la première consigne intermédiaire (I_RotRef) et un sous-module de régulation (17) agencé pour générer la première grandeur de sortie (V_Rot), la première grandeur de sortie (V_Rot) est déterminée à partir d'une comparaison entre la première consigne intermédiaire (I_RotRef) et le courant d'excitation (I_Rot) du rotor.

8. Machine électrique tournante comprenant un module de régulation (13) selon l'une quelconque des revendications précédentes.

## Patentansprüche

1. Regelungsmodul für eine drehende elektrische Maschine eines Fahrzeugs, wobei die drehende elektrische Maschine (10) einen Rotor (11) und einen Stator (12) umfasst und wobei das Regelungsmodul (13) eine Betriebsart aufweist, in der die Maschine dazu bestimmt ist, von der Batterie des Fahrzeugs getrennt zu sein, wobei das Regelungsmodul (13) ein Rotormodul (14), das dazu ausgebildet ist, eine erste Ausgangsgröße (V_Rot) zur Steuerung des Rotors (12) auszugeben, und ein Statormodul (15, 20), das dazu ausgebildet ist, eine zweite Ausgangsgröße (Vq) und eine dritte Ausgangsgröße (Vd) zur Steuerung des Stators (12) auszugeben, aufweist, wobei das Regelungsmodul **dadurch gekennzeichnet ist, dass**:
- das Rotormodul (14) dazu ausgebildet ist, einen ersten Zwischensollwert (I_RotRef) zu erzeugen, ausgehend von dem die erste Ausgangsgröße (V_Rot) erzeugt wird, wobei der erste Zwischensollwert (I_RotRef) ausgehend von einem Leistungspotential-Referenzsignal (Pdc_MaxRef) und einer Drehzahl (W) des Rotors bestimmt wird und unabhängig von einer Steuerleistung oder von einem Steuerdrehmoment der Maschine ist, das Leistungspotential der Maschine insbesondere die maximale Leistung ist, die die Maschine bei einer gegebenen Geschwindigkeit unter Berücksichtigung der, insbesondere thermischen, Einschränkungen im Dauerbetrieb der Maschine erzeugen kann,
- das Statormodul (15, 20) dazu ausgebildet ist, einen zweiten Zwischensollwert (I_qRef, I_dcRef) zu erzeugen, ausgehend von dem die zweite Ausgangsgröße (Vq) und die dritte Ausgangsgröße (Vd) erzeugt werden, wobei der zweite Zwischensollwert (I_qRef, I_dcRef) ausgehend von der Ausgangsspannung (Vdc) der Maschine bestimmt wird.

2. Regelungsmodul nach dem vorhergehenden Anspruch, **dadurch gekennzeichnet, dass** das Statormodul (15, 20) ein Optimierungsteilmodul (18, 21), das den zweiten Zwischensollwert (I_qRef, I_dcRef) erzeugt, und ein Regelungsteilmodul (19, 22), das die zweite Ausgangsgröße (Vd, Vq) erzeugt, beinhaltet, wobei das Optimierungsteilmodul und das Regelungsteilmodul insbesondere die gleiche Betriebsfrequenz aufweisen.

3. Regelungsmodul nach einem der vorhergehenden Ansprüche, **dadurch gekennzeichnet, dass** der zweite Zwischensollwert (I_qRef, I_dcRef) ferner ausgehend von einer Referenzausgangsspannung (V_dcRef) bestimmt wird.

4. Regelungsmodul nach einem der vorhergehenden Ansprüche, **dadurch gekennzeichnet, dass** die zweite Ausgangsgröße (Vq) ausgehend von einem Vergleich zwischen dem zweiten Zwischensollwert (I_qRef) und einem Quadraturachsenstrom (I_q) des Stators bestimmt wird.

5. Regelungsmodul nach einem der vorhergehenden Ansprüche, **dadurch gekennzeichnet, dass** die dritte Ausgangsgröße (Vd) ausgehend von einem Vergleich zwischen einem dritten Zwischensollwert (I_dRef) und einem Direktachsenstrom (I_d) des Stators bestimmt wird.

6. Regelungsmodul nach dem vorhergehenden Anspruch, **dadurch gekennzeichnet, dass** der dritte Zwischensollwert (I_dRef) ausgehend von dem ersten Zwischensollwert (I_RotRef) und von dem zweiten Zwischensollwert (I_qRef) bestimmt wird.

7. Regelungsmodul nach einem der vorhergehenden Ansprüche, **dadurch gekennzeichnet, dass** das Rotormodul (14) ein Optimierungsteilmodul (16), das dazu ausgebildet ist den ersten Zwischensollwert (I_RotRef) zu erzeugen, und ein Regelungsteilmodul (17), das dazu ausgebildet ist, die erste Ausgangsgröße (V_Rot) zu erzeugen, umfasst, die erste Ausgangsgröße (V_Rot) ausgehend von einem Vergleich zwischen dem ersten Zwischensollwert (I_RotRef) und dem Erregungsstrom (I_Rot) des Rotors bestimmt wird.

8. Drehende elektrische Maschine mit einem Regelungsmodul (13) nach einem der vorhergehenden Ansprüche.

## Claims

1. Regulating module for a rotary electric machine of a vehicle, the rotary electric machine (10) comprising a rotor (11) and a stator (12) and the regulating module (13) having an operating mode in which said machine is intended to be disconnected from a battery of the vehicle, the regulating module (13) comprising a rotor module (14) arranged to emit a first output quantity (V_Rot) for controlling the rotor (12) and a stator module (15, 20) arranged to emit a second output quantity (Vq) and a third output quantity (Vd) for controlling the stator (12), the regulating module being **characterized in that**:
- the rotor module (14) is arranged to generate a first intermediate setpoint (I_RotRef) on the basis of which is generated the first output quantity (V_Rot), said first intermediate setpoint (I_RotRef) being determined on the basis of a power potential reference signal (Pdc_MaxRef) and of a speed of rotation (W) of the rotor and being independent of a control power or of a control torque of the machine, the power potential of the machine being in particular the maximum power that the machine is able to generate for a given speed while meeting steady-state, and in particular thermal, constraints of the machine,
- the stator module (15, 20) is arranged to generate a second intermediate setpoint (I_qRef, I_dcRef) on the basis of which are generated the second output quantity (Vq) and the third output quantity (Vd), said second intermediate setpoint (I_qRef, I_dcRef) being determined on the basis of the output voltage (Vdc) of the machine.

2. Regulating module according to the preceding claim, **characterized in that** the stator module (15, 20) comprises an optimizing sub-module (18, 21) that generates the second intermediate setpoint (I_qRef, I_dcRef) and a regulating sub-module (19, 22) that generates the second output quantity (Vd, Vq), the optimizing sub-module and the regulating sub-module in particular having the same operating frequency.

3. Regulating module according to one of the preceding claims, **characterized in that** the second intermediate setpoint (I_qRef, I_dcRef) is, furthermore, determined on the basis of a reference output voltage (V_dcRef).

4. Regulating module according to one of the preceding claims, **characterized in that** the second output quantity (Vq) is determined on the basis of a comparison between the second intermediate setpoint (I_qRef) and a quadrature-axis current (I_q) of the stator.

5. Regulating module according to one of the preceding claims, **characterized in that** the third output quantity (Vd) is determined on the basis of a comparison between a third intermediate setpoint (I_dRef) and a direct-axis current (I_d) of the stator.

6. Regulating module according to the preceding claim, **characterized in that** the third intermediate setpoint (I_dRef) is determined on the basis of the first intermediate setpoint (I_RotRef) and of the second intermediate setpoint (I_qRef).

7. Regulating module according to one of the preceding claims, **characterized in that** the rotor module (14) comprises an optimizing sub-module (16) arranged to generate the first intermediate setpoint (I_RotRef) and a regulating sub-module (17) arranged to generate the first output quantity (V_Rot), the first output quantity (V_Rot) being determined on the basis of a comparison between the first intermediate setpoint (I_RotRef) and the energization current (I_Rot) of the rotor.

8. Rotary electric machine comprising a regulating module (13) according to any one of the preceding claims.
